# EUROPEAN PATENT APPLICATION

(11) **EP 2 757 509 A1**
(43) Date of publication of application: **23.07.2014**
(21) Application number: 13151837.5
(22) Date of filing: 18.01.2013
(51) Int. Cl.: G06Q 10/08, H04W 4/02

(54) **Method for providing data on stockpile composition**

(71) Applicant: ABB Technology AG, 8050 Zürich (CH)
(72) Inventor: Gallestey Alvarez, Eduardo, 5507 Mellingen (CH)
(74) Representative: ABB Patent Attorneys

(57) **Abstract**

The present invention is concerned with the field of industrial mining of minerals and in particular the management of mined raw material. A method for providing data on composition 1 as a function of location 2 of raw material at a stockpile 3 is provided, the method comprising performing composition analysis 11 of the raw material as a function of a specific location 2 of the analysed raw material at the stockpile 3; processing data from the composition analysis 11 including composition 1 in conjunction with the location 2 of the raw material throughout the stockpile 3 and insert available information 4, 5 on the analysed raw material at the stockpile 3 or destined for the stockpile 3 in a database 6; requesting data for a specific location 2 via a mobile device 7 from the database 6; processing the request and sending requested data for the specific location 2 from the database 6 to the mobile device 7; and displaying requested data for the specific location 2 on the mobile device 7 as a three-dimensional representation 8 of the stockpile 3.

## Description

### FIELD OF THE INVENTION

The invention relates to the field of industrial mining of minerals and in particular to the management of mined raw material.

### BACKGROUND OF THE INVENTION

The industrial mining of minerals requires a large scale operation in which an ore body, i.e. in a quarry, is reduced to a manageable size of raw material, e.g. using explosives and mechanical crushers. This is done in order to subsequently transport the raw material, bulk raw material, ore, or mineral to a stockyard for storage and further processing, e.g. separating the mineral from waste and the host rock.

Thus, raw material is transported in high volumes, e.g. using trucks or continuously moving means such as conveyor belts, after the materials have been crushed or otherwise reduced in size for the purpose of easier handling in downstream production. Typical bulk raw materials include heterogeneous masses of coarsely crushed mined or quarried bulk raw materials such as ores of limestone, bauxite, copper, zinc, lead, iron, silica, phosphate rock, potash, clay, and rare earths. Other bulk raw materials transported similarly include scrap materials, chalk, coal and coke, alumina, marl, pyrite, fly ash, process waste, etc.

The stockyard may receive raw material from several quarries with different composition and quality or the ore body may not be homogenous and has regions of greater concentration of minerals, i.e. a higher grade than other regions with a lesser grade. Different quarries, different zones within a mine or different times of exploitation or mining may represent distinct sources feeding or supplying raw material of distinct qualities to a single intermediate storage or stockpile.

For instance, from different exploitation sites within a quarry or from mine trucks of different sizes raw material of different chemical composition is transported to a crusher, where the material is crushed to fist size. From there the material is distributed onto a stockpile at the stockyard. Thus, the raw material transported and stored on stockpiles at the stockyard may exhibit different composition and qualities throughout the stockpile.

During the transportation and in particular during storing, and processing of bulk material, it is necessary to know composition and chemical or mineral content of the raw material. Measuring a material composition is particularly necessary when the raw materials are mixed, ground, or processed to form new materials.

### DESCRIPTION OF THE INVENTION

It is therefore an objective of the invention to enable the management manage of raw material in a stockyard by its composition, i.e. to provide an operator in the stockyard with means to make decisions on processing of the raw material. This objective is achieved by a method and a system according to the independent claims. Preferred embodiments are evident from the dependent patent claims, wherein the claim dependency shall not be construed as excluding further meaningful claim combinations.

According to the invention, a method for providing data on composition or quality as a function of location, i.e. in conjunction with position, of raw material at a stockpile, i.e. an inventory or stock is provided. Initially, a composition or quality analysis such as a measurement of the raw material properties is performed as a function of a specific location, i.e. a two-dimensional or three-dimensional location, of the analysed raw material at the stockpile. The measurement can be performed using know measurement methods like for example the method disclosed in EP 1862795 A1.

Subsequently, data from the composition analysis including composition in conjunction with the location of the raw material throughout the stockpile is processed and available information on the analysed raw material at the stockpile or destined for, i.e. in transit to, the stockpile is inserted or filled in a database or a material database.

The information on the analysed raw material is then available to an operator in the stockyard which may request, i.e. query or retrieve data for a specific location via a mobile device from the database. Upon request, the query is processed and the requested data for the specific location from the database is sent to the mobile device.

Finally, the requested data for the specific location is displayed on the mobile device, e.g. the operator's handheld device, as a two-dimensional or three-dimensional representation of the stockpile providing critical information to the operator in the stockyard for deciding on further processing of the raw material.

In a preferred variant of the invention, the data from the composition analysis is processed in conjunction with date and time of the analysis and the data for a specific location from the database is requested for a specific date and time in the past, at present, or in the future.

In an advantageous embodiment of the invention, the specific location of the request is determined by satellite positioning means, i.e. GPS technology, applied to the mobile device.

In an other advantageous embodiment of the invention, the specific location of the request is determined by a location that the mobile device is pointing at or focussing on by optical means of the mobile device such for example a optical camera system or laser system.

In another embodiment of the invention, the user has a mobile devices enhanced with a camera and a GPS-receiver. The mobile device has a software function that manually or automatically makes a picture of the environment, sends it to the central data server together with the cameral location and direction of the camera lenses. The server then uses this information to update the shape of the three-dimensional stockpile model. The server now sends back to the mobile device the updated shape and all other information of the part of the stockpile the user is looking at as an overlay of the picture. The operator might be requested to confirm the correctness of the new shape at a given location.

In a further variant of the invention, the request of data for a specific location via the mobile device from the data base and in return the requested information for the specific location from the database to the mobile device is transmitted via wireless communication means such as a wireless network device.

In a further embodiment of the invention, the analysis of the raw material as a function of the specific location of the analysed raw material is performed at a quarry feeding the stockpile and available information on the analysed raw material at the quarry is inserted in a database, i.e. a quarry database.

The present invention also relates to a system for providing data on composition as a function of location of raw material at a stockpile, adapted to performing composition analysis of the raw material as a function of a specific location of the analysed raw material at the stockpile, processing data from the composition analysis including composition in conjunction with the location of the raw material throughout the stockpile and in conjunction with date and time of the analysis and inserting available information on the analysed raw material at the stockpile or in transit to the stockpile in a database, requesting data for a specific location and for a specific date and time via a mobile device from the database, processing the request and sending requested data for the specific location from the database to the mobile device, and displaying requested data for the specific location on the mobile device as a three-dimensional representation of the stockpile.

The present invention further relates to a computer program product including computer program code for controlling one or more processors of a device adapted to be connected to a communication network and/or configured to store a standardized configuration representation, particularly, a computer program product including a computer readable medium containing therein the computer program code.

Accordingly, the invention provides the ability to show in real-time information on the stock or inventory to an operator in the stockyard while moving through the stockyard. This provides further a basis of optimization of the economic performance of the mine and allows better decision making, for instance for material blending, i.e. based on ore purity, or for deciding which equipment is to be used, i.e. based on ore hardness.

### BRIEF DESCRIPTION OF THE DRAWINGS

The subject matter of the invention will be explained in more detail in the following text with reference to preferred exemplary embodiments which are illustrated in the attached drawings, in which:
Fig.1 schematically shows a stockpile at a stockyard comprised of raw material of varying composition;
Fig.2 shows a flow diagram of a preferred embodiment of the method according to the invention

The reference symbols used in the drawings, and their meanings, are listed in summary form in the list of designations. In principle, identical parts are provided with the same reference symbols in the figures.

### DETAILED DESCRIPTION OF PREFERRED EMBODIMENTS

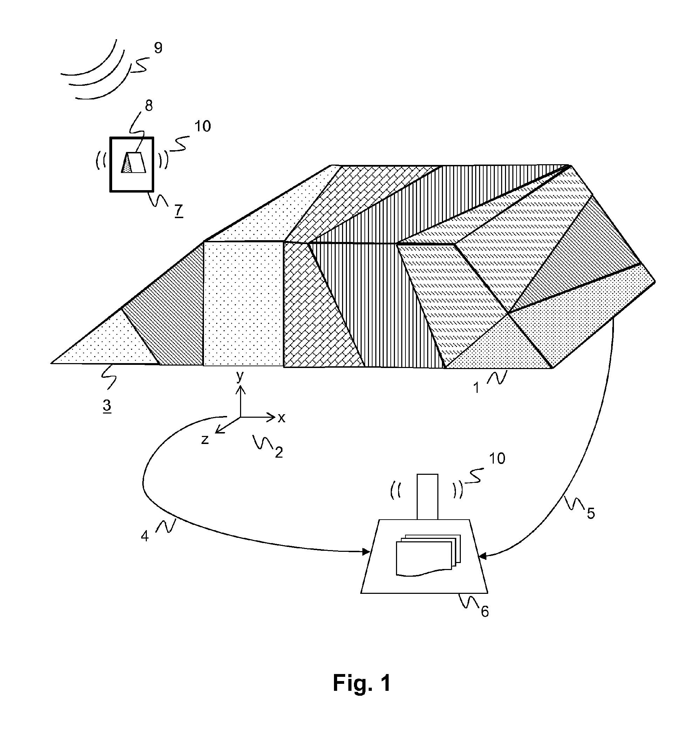

Fig.1 shows schematically raw material with varying composition 1 at different locations 2 at a stockpile 3. The stockyard receives raw material from various sources such as different quarries and from different regions within a quarry with varying composition of the raw material. Thus, the raw material deposited on the stockpile 3 of the stockyard comprises different composition. The raw material is transported in large volumes from the quarries to the stockpile 3, e.g. via conveyer belts or trucks. The stockpile 3, therefore, has regions with raw material of different composition 1 at different locations 2 of the stockpile 3, e.g. depending on when the raw material was deposited on the stockpile 3.

For instance, a bottom corner of the stockpile may have received raw material at a first time and on top of that raw material further raw material from a different source may have been deposited at a second time. Thus, the bottom corner and the top of the stockpile have different compositions 1 of the respective raw material.

The composition 1 at a location 2 of the raw material is determined by performing a composition analysis 11, e.g. after depositing the raw material at the stockpile 3, directly after depositing the raw material at the stockpile 3 or at any time thereafter. In addition, the composition 1 of raw material destined or in transit to the stockpile 3 may be available as additional information. This way a prediction of future composition 1 and location 2 of raw material to be deposited on the stockpile 3 is possible.

All information (4, 5) available on the raw material already deposited or about to be deposited at the stockpile 3 may be inserted in a data base 6 in particular the composition 1 in conjunction of, i.e. as a function of, the location 2 of the raw material at the stockpile 3. This information (4, 5) may be transferred directly after the composition analysis 11 via a network 10, e.g. a wireless network on site. However, the data base 6 may be located at a central computation unit of the mine.

In order to provide valuable information for deciding on further processing of the raw material to an operator in the stockyard, the operator is equipped with a mobile device 7. The operator may request data from the data base 6 via his mobile device 7. The request may be for any location throughout the stockpile 3 or the stockyard as long as data on it is available. For instance, the operator may need a certain composition in a certain amount for further processing and may request therefore information on this composition from the data base 6.

The stockyard or the stockpile 3 may be very extensive and information even limited to a specific composition may be to vast to be useful for the operator. Therefore, in order to support the operator further the specific location, the request is carried out on, may be determined by satellite positioning means 9 such as a GPS signal or tracker. This way the operator gets useful information on the composition 1 of the raw material for his current location 2.

However, the operator's request is transmitted to the data base 6 or a central computing unit via a network 10, e.g. a wireless network, and further processed. Subsequently, the requested data is sent from the data base 6 or the central computing unit to the operator's mobile device 7 in the stockyard via the network 10. The mobile device 7 is equipped to display the received data as a three-dimensional representation 8 of the stockpile 3. This way the operator gets the necessary information to decide on further processing of the raw material.

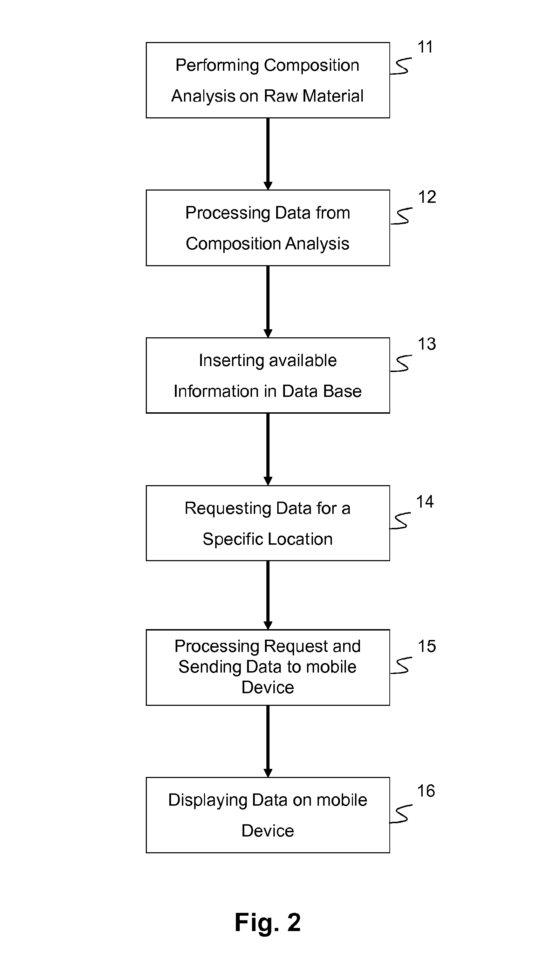

Fig. 2 shows a flow diagram of a preferred embodiment of the method according to the invention. Initially, the composition analysis 11 is performed in order to determine the composition 1 of the raw material as a function of the location 2. Subsequently, the retrieved data from the composition analysis 11 is processed in a second step 12, i.e. the composition 1 is linked with the location 2 and the time and date the composition analysis 11 was performed. In a next step 13 the available information 4, 5 is inserted in the database 6. In the following step 14 the data may be requested for a specific location 2. Subsequently, the request may be processed and the requested data sent to the mobile device 7 in a further step 15. Finally, the requested data is displayed on the mobile device 7 in a final step 16.

Preferably, the functional modules and/or the configuration mechanisms are implemented as programmed software modules or procedures, respectively; however, one skilled in the art will understand that the functional modules and/or the configuration mechanisms can be implemented fully or partially in hardware.

### LIST OF DESIGNATIONS

- 1: Composition
- 2: Location
- 3: Stockpile
- 4: Information
- 5: Information
- 6: Data base
- 7: Mobile device
- 8: Three-dimensional representation
- 9: Satellite positioning means
- 10: Wireless communication means
- 11: Composition analysis
- 12: Second flow diagram step
- 13: Flow diagram step
- 14: Flow diagram step
- 15: Flow diagram step
- 16: Flow diagram step

## Claims

1. A method for providing data on composition (1) as a function of location (2) of raw material at a stockpile (3), the method comprising
- performing composition (1) analysis of the raw material as a function of a specific location (2) of the analysed raw material at the stockpile (3);
- processing data from the composition analysis (11) including composition (1) in conjunction with the location (2) of the raw material throughout the stockpile (3) and inserting available information (4, 5) on the analysed raw material at the stockpile (3) or destined for the stockpile (3) in a database (6);
- requesting data for a specific location (2) via a mobile device (7) from the database (6);
- processing the request and sending requested data for the specific location (2) from the database (6) to the mobile device (7); and
- displaying requested data for the specific location (2) on the mobile device (7) as a three-dimensional representation (8) of the stockpile (3).

2. The method according to claim 1, wherein the data from the composition analysis (11) is processed in conjunction with date and time of the analysis and wherein the data for a specific location (2) from the database (6) is requested for a specific date and time.

3. The method according to according to claim 1, wherein the specific location (2) of the request is determined by satellite positioning means (9) of the mobile device (7).

4. The method according to according to claim 1, wherein the request of data for a specific location (2) via the mobile device (7) from the data base (6) and the requested data for the specific location (2) from the database to the mobile device is transmitted via wireless communication means (10).

5. The method according to any of the previous claims, wherein the analysis of the raw material as a function of the location (2) of the analysed raw material is performed at a quarry and available information (4, 5) on the analysed raw material at the quarry is inserted in a database (6).

6. A mobile device for providing data on composition of raw material as a function of location at a stockpile, adapted to
- request from a database (6) and for a specific location (2) of a raw material stockpile (3), data on composition (1) of raw material at the specific location (2) previously obtained from a composition analysis (11) performed on the raw material as a function of location at the stockpile (3), and
- display data on composition (1) of raw material at the specific location (2) received from the database (6) in response to the request.

7. A system for providing data on composition (1) as a function of location (2) of raw material at a stockpile (3), adapted to
- performing composition analysis (11) of the raw material as a function of a specific location (2) of the analysed raw material at the stockpile (3);
- processing data from the composition analysis (11) including composition (1) in conjunction with the location (2) of the raw material throughout the stockpile (3) and in conjunction with date and time of the analysis and inserting available information (4, 5) on the analysed raw material at the stockpile (3) or in transit to the stockpile (3) in a database (6);
- requesting data for a specific location (2) and for a specific date and time via a mobile device (7) from the database (6);
- processing the request and sending requested data for the specific location (2) from the database (6) to the mobile device (7); and
- displaying requested data for the specific location (2) on the mobile device (7) as a three-dimensional representation (8) of the stockpile (3).
